(19) Europäisches Patentamt
European Patent Office
Office européen des brevets

(11) Veröffentlichungsnummer : **0 084 623**
**B1**

(12) # EUROPÄISCHE PATENTSCHRIFT

(45) Veröffentlichungstag der Patentschrift : **28.08.85**

(51) Int. Cl.⁴ : **H 01 M 6/18**, H 01 M 4/60

(21) Anmeldenummer : **82110929.5**

(22) Anmeldetag : **26.11.82**

(54) **Polyacetylenzelle mit keramischem Festkörperelektrolyten.**

(30) Priorität : **22.01.82 DE 3201909**

(43) Veröffentlichungstag der Anmeldung : **03.08.83 Patentblatt 83/31**

(45) Bekanntmachung des Hinweises auf die Patenterteilung : **28.08.85 Patentblatt 85/35**

(84) Benannte Vertragsstaaten : **DE FR GB IT NL SE**

(56) Entgegenhaltungen :
**EP-A- 0 013 199**
**EP-A- 0 036 118**
**US-A- 4 222 903**
**PATENTS ABSTRACTS OF JAPAN, Band 5, Nr. 113, 22. Juli 1981, (E-66) 785**

(73) Patentinhaber : **VARTA Batterie Aktiengesellschaft**
**Am Leineufer 51**
**D-3000 Hannover 21 (DE)**

(72) Erfinder : **Voss, Ernst, Dr.**
**Heidestrasse 14**
**D-6237 Liederbach 2 (DE)**

(74) Vertreter : **Kaiser, Dieter Ralf, Dipl.-Ing.**
**Gundelhardtstrasse 72**
**D-6233 Kelkheim/Ts. (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft ein galvanisches Element mit einer festen positiven und einer festen negativen Elektrode, von denen zumindest eine im wesentlichen aus dotiertem Polyacetylen besteht, sowie einem festen Elektrolyten.

Durch die Arbeiten von Alan G. MacDiarmid und anderen (vgl. z. B. Organic Batteries : Reversible n- and p-Type Electrochemical Doping of Polyacetylene, $(CH)_x$ by David MacInnes, Jr., Mark A. Druy, Paul J. Nigrey, David P. Nairns, Alan G. MacDiarmid and Alan J. Heeger, J. C. S. Chem. Comm., 1981, 317) ist zu den bis dahin bekannten elektrochemischen Stromquellen die sogenannte Polyacetylen-Batterie hinzugetreten. Dieser Batterie liegt zugrunde, daß das organische Polymer Polyacetylen in Gestalt dünner Folien auf elektrochemischem Wege sowohl mit Kationen als auch mit Anionen dotiert werden kann, wobei sich nicht nur die Leitfähigkeit des Polymers um Größenordnungen erhöht, sondern auch eine teilweise Oxidation bzw. Reduktion desselben erfolgt. Damit ist die Möglichkeit des Einsatzes von dotiertem Polyacetylen als positives bzw. negatives aktives Elektrodenmaterial in einem elektrochemischen Element gegeben.

Als Dotierungsmittel kommen Salze infrage, die sich beispielsweise aus den Kationen $Li^+$ oder n-$(C_4H_9)_4N^+$ und den Anionen $ClO_4^-$, $AsF_6^-$, $PF_6^-$ zusammensetzen. Bringt man eine Polyacetylenfolie zusammen mit einem Pt-Blech in die Lösung eines dieser Salze in einem organischen Lösungsmittel und verbindet sie so mit den Polen einer Spannungsquelle, daß das Polyacetylen zur Anode und das Platin zur Kathode wird, so ist mit dem einsetzenden Stromfluß ein Vorgang beispielsweise gemäß Gl. (1) verbunden :

$$(CH)_x + 0{,}06\ xLiClO_4 = [(CH)^{0{,}06+}(ClO_4^-)_{0{,}06}]_x + 0{,}06\ xLi^+ + 0{,}06\ xe^- \qquad (1)$$

Der Index 0,06 besagt, daß 6 Mol % der $(CH)_x$-Folie mit $ClO_4^-$ dotiert sind, wobei das Polyacetylen selbst in ein stabilisiertes positiv geladenes Polycarboniumion, $(CH^{0{,}06+})_x$, umgewandelt worden ist. Das Anion $ClO_4^-$ wird bei diesem Vorgang, der mit einer elektrochemischen Ladung vergleichbar ist und bei der ein oxidiertes, p-dotiertes Polyacetylen entsteht, nicht oxidiert, sondern dient innerhalb des gebildeten Komplexes lediglich als Gegenion zur Aufrechterhaltung der elektrischen Neutralität.

Eine sinngemäß gleiche, nur mit inverser Stromrichtung durchgeführte Behandlung der Polyacetylenfolie hat die Bildung eines reduzierten, n-dotierten $(CH^{0{,}06-})_x$ gemäß Gl. (2) zum Ergebnis :

$$(CH)_x + 0{,}06\ xLiClO_4 + 0{,}06\ xe^- = [(CH)^{0{,}06-}Li^+_{0{,}06}]_x + 0{,}06\ xClO_4^- \qquad (2)$$

Schließt man nunmehr die p-dotierte und die n-dotierte Polyacetylenfolie über einen Widerstand kurz, fließt zwischen beiden ein Entladestrom, mit dem die Fremddotierung wieder rückgängig gemacht wird :

$$[(CH)^{0{,}06+}(ClO_4^-)_{0{,}06}]_x + [(CH)^{0{,}06-}Li^+_{0{,}06}]_x = 2\ (CH)_x + 0{,}06\ xLiClO_4 \qquad (3)$$

Hiermit liegt im Prinzip ein elektrochemisches Sekundärelement vor, dessen aktive Elektrodenbestandteile nahezu ausschließlich aus organischem Material aufgebaut werden können und bei dem die Lade- bzw. Entladevorgänge stets auf Dotierungsreaktionen mittels Fremdionen bzw. einer Umkehr oder Aufhebung dieser Dotierungen beruhen.

Batterien dieses Typs sind wegen der Leichtigkeit ihrer Elektrodensubstanz und der daraus resultierenden hohen gewichtsbezogenen Energiedichte sowie wegen ihrer Umweltfreundlichkeit interessant. Um auch die Nachteile eines flüssigen Elektrolyten in diesem Fall auszuschalten, ist in der deutschen Patentanmeldung P 31 39 400 bereits vorgeschlagen worden, galvanische Zellen des Polyacetylen-Typs als komplette Festkörperzellen auszubilden, indem anstelle des sonst üblichen organischen Lösungsmittels für das Leitsalz ein Alkylenoxid-Polymer — z. B. Polyäthylenoxid — eingesetzt wird, das mit Alkalimetallsalzen feste Addukte mit guter Ionenleitfähigkeit bildet. Aus Patent Abstracts of Japan, Band 5, Nr. 113 (81)(E-66)[785] ist auch ein galvanisches Element bekannt, in dem eine mit dotiertem Polyacetylen überzogene Nickel Platte als Elektrode mit einem Festen Elektrolyten aus Lithium nitrid zusammengebracht ist. Der vorliegenden Erfindung liegt die Aufgabe zugrunde ein galvanisches Feststoffelement mit Elektroden auf Polyacetylen-Basis anzugeben, welches ein noch weitergehendes Maß an Kompaktheit besitzt und das mit für moderne Festkörperbatterien bereits eingeführten Fertigungstechniken hergestellt werden kann.

Die Aufgabe wird erfindungsgemäß dadurch gelöst, daß der feste Elektrolyt aus einem keramischen Festkörper besteht, auf den das organische Elektrodenmaterial unmittelbar aufpolymerisiert ist.

Als keramische Festkörperelektrolyte im Sinne der Erfindung eignen sich vornehmlich $\beta$-$Al_2O_3$ und Mischkristallverbindungen des quaternären Systems $ZrO_2$—$P_2O_5$—$SiO_2$—$Na_2O$, die Na-ionenleitend sind, oder der Li-ionenleitende Festkörperelektrolyt Lithiumnitrid, $Li_3N$. Letzterer wird in der DE-OS 27 50 607 näher beschrieben. Bei den erwähnten Mischkristallen handelt es sich um ein erst in jüngster Zeit erschlossenes Elektrolytmaterial mit bemerkenswerten kritallchemischen und elektrischen Eigen-

schaften (Deutsche Patentanmeldungen P 30 32 894 und P 31 23 099). Diese Festkörperelektrolyte sind außer in Form von Einkristallen auch als Sinterkörper herstellbar. Zu dem ursprünglich dargestellten sogenannten Nasicon (Natrium-super-ion-conductor) mit der Zusammensetzung $Na_3Zr_2Si_2PO_{12}$ sind inzwischen weitere Mischkristallreihen ähnlicher Art hinzugetreten. Die Existenzgebiete der hier in Betracht kommenden Mischkristalle sind bei räumlicher Darstellung des Vierstoffsystems als Tetraeder mit den Ecken $ZrO_2$, $P_2O_5$, $SiO_2$ und $Na_2O$ in bestimmten Schnittebenen innerhalb dieses Tetraeders angesiedelt. Eine besonders bevorzugte Verbindung aus einer der erwähnten Mischkristallreihen hat die Zusammensetzung $Na_{2,94}Zr_{1,54}Si_{2,2}P_{0,8}O_{10,53}$. Diese zeichnet sich durch besondere chemische Stabilität gegenüber Natrium und durch eine hohe Ionenleitfähigkeit aus, welche bei Raumtemperatur etwa $11 \cdot 10^{-4} \Omega^{-1} cm^{-1}$ erreicht.

Die praktische Aufarbeitung derartiger Mischkristalle zur Verwendung als Elektrolyte in Festkörperzellen geschieht heute großtechnisch in der Weise, daß aus ihnen runde oder rechteckige Scheiben beliebiger Größe geschnitten werden, wobei Dicken bis zu 0,2 mm herunter erreicht werden können.

Es ist nun erfindungsgemäß möglich, auf diesen Elektrolytscheiben das Elektrodenmaterial in situ zu erzeugen, indem man Acetylen auf diese unmittelbar aufpolymerisiert. Auf diese Weise erhält man eine außerordentlich stabile Festkörperzelle in der Form eines einzigen integrierten Bauelements.

Aus der Literatur sind verschiedene Methoden der Polyacetylen-Synthese an sich bekannt (vgl. z. B. William H. Watson, Jr., Warren C. McMordie, Jr., and Larry G. Lands, J. Polym. Sci. Vol. 55, 137-144 (1961) und T. Ito, H. Shirakawa, and S. Ikeda, J. Polym. Sci., Polym. Chem. Ed., 12, 11-20 (1974)). Die Polymerisation des Monomeren erfolgt mit Hilfe von Ziegler-Natta-Katalysatoren in einem indifferenten organischen Lösungsmittel. Bei den genannten Katalysatoren handelt es sich um metallorganische Verbindungen, meist um Mischsysteme etwa des Typs $TiCl_4$—$Al(C_2H_5)_3$, $Ti(OC_4H_9)_4$—$Al(C_2H_5)_3$, $TiCl_4$—$Al(i\text{-}C_4H_9)_3$ oder $TiCl_4$-n-$C_4H_9Li$.

Für den erfindungsgemäßen Zweck hat es sich als günstig erwiesen, die Oberflächen der sinterkeramischen Elektrolytscheiben mit der Lösung eines Ziegler-Natta-Katalysators in Toluol zu besprühen und danach die besprühten Scheiben einer Acetylen-Atmosphäre auszusetzen, wobei sich auf den Oberflächen das Polyacetylen in einer durch Temperatur, Zeit und Katalysator-Konzentration steuerbaren Qualität niederschlägt.

Um eine Kurzschlußbildung zwischen den Elektroden über den Rand der Scheibe auszuschließen, muß dieser von Polyacetylen freigehalten werden. Die Beaufschlagung der Oberflächen erfolgt daher erfindungsgemäß nacheinander, etwa in folgender Weise :

Die Scheiben liegen z. B. in Kassetten, die nur eine Oberfläche frei lassen. Diese Kassetten können im Durchlaufverfahren durch eine Kammer geführt werden, in der sie zunächst besprüht werden mit der genannten Katalysatorlösung und dann der Acetylen-Atmosphäre ausgesetzt werden.

In einer 2. Stufe durchlaufen sie ein Waschbad, in dem der überschüssige Ziegler-Katalysator ausgewaschen wird, und schließlich erfolgt die Trocknung. Bei einem nochmaligen Durchlauf der Kassetten durch dieselbe Anlage oder einer zweiten gleichartig aufgebauten Anlage, die der ersten nachgeschaltet ist, wird auch die bisher nicht der Lösung und dem Acetylen ausgesetzte Unterseite der Scheibe mit Polyacetylen belegt.

Alle Zwischenoperationen des Waschens und Trocknens müssen in einer inerten Atmosphäre durchgeführt werden.

Im nächsten Verfahrensschritt erfolgt die unterschiedliche Dotierung der beiden Polyacetylenschichten in an sich bekannter Weise, z. B. dadurch, daß das gesamte Zellpaket beispielsweise in eine Lösung von $NaPF_6$ in $CH_2Cl_2$ eingetaucht wird und durch entsprechende Polarisierung der beiden Polyacetylenelektroden eine Elektrode mit $Na^+$- und die andere mit $PF_6^-$-Ionen dotiert wird. Nachdem diese Dotierung vollständig durchgeführt worden und das Zellpaket aus der Dotierungslösung herausgenommen und getrocknet worden ist, liegt eine erfindungsgemäße Polyacetylen-Festkörperzelle vor, deren Zellreaktion wie folgt beschrieben werden kann :

$$[(CH)^{0,06+}(PF_6^-)_{0,06}]_x + [(CH)^{0,06-}Na^+_{0,06}]_x = 2\ (CH)_x + 0,06\ xNaPF_6 \qquad (4)$$

Es liegt auch im Rahmen der Erfindung, daß die Festkörperelektrolytscheiben nur einseitig mit Polyacetylen beschichtet werden, während die andere Seite, je nach dem Ionenleitungscharakter (Li- oder Na-ionenleitend) des vorgesehenen Festkörperelektrolyten, eine Li- oder Na-Folie als Beschichtung erhält, und daß die Polyacetylenschicht in einer perchlorathaltigen Lösung durch entsprechende elektrochemische Polarisation (anodischer Strom) mit Perchlorat dotiert wird. Nach dem Trocknen entsteht auf diese Weise z. B. eine Lithiumbatterie die aufgrund folgender Reaktionsgleichung arbeitet :

$$0,06\ xLi + [(CH)^{0,06+}(ClO_4^-)_{0,06}]_x = (CH)_x + 0,06\ xLiClO_4 \qquad (5)$$

Eine vorteilhafte Ausführungsform des erfindungsgemäßen galvanischen Elements ist auf der Grundlage eines einstückigen Festelektrolytkörpers möglich, welcher vorzugsweise zwei hochporöse, für die Aufnahme von aktivem Elektrodenmaterial geeignete Abschnitte und einen dazwischenliegenden dichten Abschnitt aufweist, der der eigentliche Festelektrolytseparator ist. Ein solcher Compoundkörper

und seine sintertechnische Darstellung wurden in der älteren deutschen Patentanmeldung P 31 29 679.3 bereits beschrieben. Durch das Ausfüllen der Porenräume auf einer oder beiden Seiten des Festelektrolytseparatorteiles mit Polyacetylen im Zuge des Polymerisationsprozesses wird eine besonders innige Kontaktierung desselben mit dem Elektrolyten erzielt und nach Dotierung wie oben ein Element von größter Kompaktheit geschaffen.

Eine Sekundärzelle läßt sich mit Lithiumjodid als Dotierungsmittel realisieren, wobei die elektrochemischen Vorgänge durch Gl. (6) wiederzugeben sind.

$$0{,}06\ xLi + [(CH)^{0{,}06+}J^{-}{}_{0{,}06}]_x \underset{\text{Ladg.}}{\overset{\text{Entl.}}{\rightleftarrows}} (CH)_x + 0{,}06\ xLiJ \qquad (6)$$

Die erfindungsgemäßen galvanischen Festkörperelemente sind von ihrem Bauprinzip her in besonderem Maße der Miniaturisierung zugänglich. Ihre gute Verwendbarkeit in allen Bereichen der Konsum-Elektronik liegt auf der Hand.

**Patentansprüche**

1. Galvanisches Element mit einer festen positiven und einer festen negativen Elektrode, von denen zumindest eine im wesentlicher aus dotiertem Polyacetylen besteht, sowie einem festen Elektrolyten, wobei der Elektrolyt aus einem ionenleitenden keramischen Festkörper besteht, auf den das Polyacetylen des Elektrodenmaterials unmittelbar aufpolymerisiert ist.

2. Galvanisches Element nach Anspruch 1, dadurch gekennzeichnet, daß der keramische Festkörperelektrolyt ein Na-ionenleitendes Material aus $\beta$-$Al_2O_3$, $Na_3Zr_2Si_2PO_{12}$ sowie verwandten Mischkristallverbindungen des quaternären Systems $ZrO_2$—$P_2O_5$—$SiO_2$—$Na_2O$ oder Li-ionenleitendes Lithiumnitrid ist.

3. Galvanisches Element nach den Ansprüchen 1 und 2, dadurch gekennzeichnet, daß die negative Elektrode eine Li- oder Na-Elektrode ist.

4. Galvanisches Element nach den Ansprüchen 1 und 2, dadurch gekennzeichnet, daß die negative Elektrode eine mit Li oder Na dotierte Polyacetylen-Elektrode ist.

5. Verfahren zur Herstellung eines galvanischen Elements nach Anspruch 1, dadurch gekennzeichnet, daß zumindest eine Seite des Festkörperelektrolyten mit einer Katalysator-Lösung nach Ziegler-Natta besprüht und einer Acetylen-Atmosphäre ausgesetzt wird, und daß nach Auspolymerisieren, Waschen und Trocknen des organischen Elektrodenmaterials durch elektrochemische Polarisation die Polyacetylenelektrode mit dem erforderlichen Kation oder Anion dotiert wird.

**Claims**

1. Galvanic cell with a solid positive electrode and a solid negative electrode, at least one of which consists essentially of doped polyacetylene, as well as a solid electrolyte wherein the electrolyte consists of an ion-conducting ceramics body onto which the polyacetylene of the electrode material is directly polymerised.

2. Galvanic cell according to claim 1, characterised in that the ceramics solid body electrolyte is an Na ion-conducting material of $\beta$-$Al_2O_3$, $Na_3Zr_2Si_2PO_{12}$ as well as related mixed crystal compounds of the quaternary system $ZrO_2$—$P_2O_5$—$SiO_2$—$Na_2O$ or Li ion-conducting lithium nitride.

3. Galvanic cell according to claims 1 and 2, characterised in that the negative electrode is a Li or Na electrode.

4. Galvanic cell according to claims 1 and 2, characterised in that the negative electrode is a polyacetylene electrode doped with Li or Na.

5. Method for producing a galvanic cell according to claim 1, characterised in that at least one side of the solid body electrolyte is sprayed with a Ziegler-Natta catalyst solution and is exposed to an acetylene atmosphere, and that after polymerisation, washing and drying the organic electrode material, the polyacetylene electrode is doped with the required cation or anion by electrochemical polarisation.

**Revendications**

1. Elément galvanique, avec une électrode positive solide et une électrode négative solide, dont l'une au moins est essentiellement constituée de polyacétylène dopé, ainsi qu'avec un électrolyte solide, élément caractérisé en ce que l'électrolyte est constitué d'une structure solide en céramique à conductibilité ionique sur laquelle est directement polymérisé le polyacétylène du matériau de l'électrode.

2. Elément galvanique selon la revendication 1, caractérisé en ce que l'électrolyte de structure solide

en céramique est un matériau conducteur des ions Na constitué de $\beta$-$Al_2O_3$, $Na_3Zr_2Si_2PO_{12}$ ainsi que de combinaisons apparentées de cristaux mixtes du système quaternaire $ZrO_2$—$P_2O_5$—$SiO_2$—$Na_2O$, ou bien de nitrure de lithium conducteur d'ions Li.

3. Elément galvanique selon les revendications 1 et 2, caractérisé en ce que l'électrode négative est une électrode Li ou bien une électrode Na.

4. Elément galvanique selon les revendications 1 et 2, caractérisé en ce que l'électrode négative est une électrode en polyacétylène dopé avec Li ou bien avec Na.

5. Procédé pour la réalisation d'un élément galvanique selon la revendication 1, procédé caractérisé en ce qu'au moins une face de l'électrolyte de structure solide est aspergée avec une solution de catalyseur Ziegler-Natta et est exposée à une atmosphère d'acétylène, et qu'après polymérisation, croissance, et séchage du matériau organique de l'électrode, l'électrode en polyacétylène est dopée par polarisation électrochimique avec le cation ou l'anion nécessaire.